(19) Europäisches Patentamt

European Patent Office

Office européen des brevets

(11) Veröffentlichungsnummer: **0 306 601 B1**

(12) **EUROPÄISCHE PATENTSCHRIFT**

(45) Veröffentlichungstag der Patentschrift: **03.06.92**

(51) Int. Cl.⁵: **A47J 43/25**

(21) Anmeldenummer: **88104474.7**

(22) Anmeldetag: **21.03.88**

(54) **Vorrichtung zum Reiben von Käse.**

(30) Priorität: **10.09.87 DE 8712250 U**

(43) Veröffentlichungstag der Anmeldung:
**15.03.89 Patentblatt 89/11**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**CH-A- 596 808**
**FR-A- 513 953**
**FR-A- 605 462**

(73) Patentinhaber: **Ohlerich, Anita Marianne-
Luise, geb. Sacksen
Dessauer Weg 4
W-6800 Mannheim 31(DE)**

(72) Erfinder: **Ohlerich, Anita Marianne-Luise, geb.
Sacksen
Dessauer Weg 4
W-6800 Mannheim 31(DE)**

(74) Vertreter: **Ratzel, Gerhard, Dr.
Seckenheimer Strasse 36a
W-6800 Mannheim 1(DE)**

EP 0 306 601 B1

## Beschreibung

Die vorliegende Erfindung betrifft eine Vorrichtung zum Reiben von in fester Form, also als Formstück vorliegendem Käse, beispielsweise von dem allgemein bekannten Parmesan-Käse.

Frisch geriebener Käse beispielsweise frisch geriebener Parmesan-Käse, erfreut sich ständig größerer Beliebtheit als in Suppen und Speisen aller Art hinzugegebenes Nahrungs- und Genußmittel, das zur Verfeinerung der Speisen einen wesentlichen Beitrag zu leisten im Stande ist.

Die vorliegende erfindungsgemäße Vorrichtung zum Reiben von Käse, kurz auch "Käsereibe" genannt,eignet sich in hervorragender Weise dazu, am Tisch vom jeweiligen Benutzer in einer Weise benutzt zu werden, die die geschmacklichen Wirkungen des Käses optimieren.

Es ist allgemein bekannt, welchen Siegeszug die Pfeffermühle bei Tisch angetreten hat, so das umso mehr seit Jahren das Bedürfnis bestand bezüglich des reibfähigen Käses einen ähnlichen Effekt bei Tisch zu erreichen, wie dies die Pfeffermühle beim Pfeffer gestattet.

Infolge der völlig anderen Festigkeits und sonstigen Verhältnisse,hat die Pfeffermühle bezüglich einer Käsereibe keinerlei Anregungen geben können.

Dieses lang gehegte Bedürfnis zur Schaffung einer bei Tisch vom jeweiligen Anwender leicht und elegant zu handhabenden Käsereibe wird mit vorliegender Erfindung gelöst.

Aus der FR-A-605 462 ist eine Käsereibe gemäß des Oberbegriffs bekannt. Die Anordnung bzw. Ausbildung der Drehachse gewährleistet jedoch keine befriedigende Rotationsführung der verwendeten Teile.

Der vorliegenden Erfindung liegt daher die Aufgabe zugrunde, eine Käsereibe eingangs genannter Gattung zu schaffen, bei der die Drehachse als einwandfreie Rotationsführung fungiert.

Diese Aufgabe wird erfindungsgemäß durch eine Vorrichtung zum Reiben von Käse, bestehend aus einer Reibeplatte, einer Käseträgerplatte und einer Gegenplatte, die koaxial einander zugeordnet sind, gemäß des vorgeschlagenen Anspruchs 1 gelöst. Besondere Ausführungsformen und Weiterbildungen sind in den Unteransprüchen gekennzeichnet.

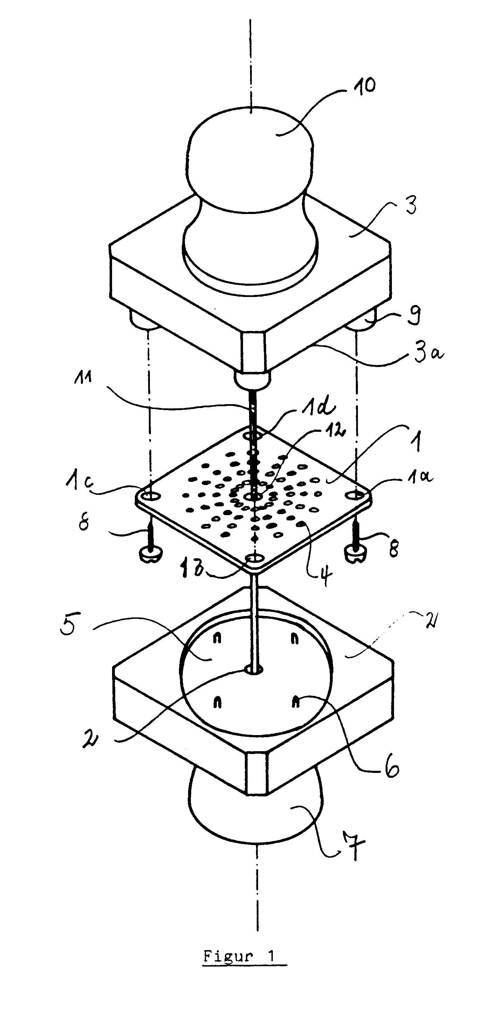

Das Wesen vorliegender Erfindung wird anhand der beiliegenden Figur, die eine bevorzugte Ausführungsform darstellt, im einzelnen erläutert.

Danach besteht die erfindungsgemäße Käsereibe aus drei Hauptbestandteilen, nämlich der Reibeplatte 1, der Käseträgerplatte 2 und der Gegenplatte 3.

Die Reibeplatte 1 besteht aus hartem Material,vorzugsweise aus nicht rostendem Stahl und weist eine Vielzahl von Durchbrechungen 4 auf, die scharfe, vorzugsweise aufgeworfene Ränder aufweisen; die Reibeplatte 1 ist damit als sogenanntes "Reibeisen" aufzufassen und einem solchen als Element äquivalent.

Die Käseträgerplatte 2 weist eine gegen die Reibeplatte 1 gerichtete Trägerfläche auf, die vorzugsweise gegenüber den Randzonen der Käseträgerplatte schwach muldenförmig ausgebildet ist; diese vorzugsweise kreisförmig gestaltete Mulde trägt die Bezugsnummer 5.

In dieser Mulde sind nach einer bevorzugten Ausführungsform Spitzen 6 angeordnet, auf die das vorzugsweise mehr oder weniger flach ausgebildete feste Käsestück beispielsweise Parmesan-Käsestück aufgespießt werden.

Die der Käseauflagefläche abgewandte Seite der Käseträgerplatte trägt nach einer bevorzugten Ausführungsform einen Handknauf 7.

Die Reibeplatte 1 ist mit der Innenfläche 3a der Gegenplatte 3 bevorzugtermaßen lösbar verbunden, beispielsweise in der Form, daß die in den vier Ecken der quadratischen Reibeplatte 1 angeordneten Lochungen 1a, 1b, 1c und 1d von den entsprechenden Schrauben 8 durchbrochen werden, welche Schrauben 8 in entsprechende Fortsetze 9 an der Unterseite der Gegenplatte eingeschraubt werden.

Falls eine Generalreinigung der Einzelteile notwendig ist, so kann durch Lösen der Schrauben 8 die erfindungsgemäße Käsereibe leicht in ihre Bestandteile zerlegt werden.

Die Oberseite der Gegenplatte 3 weist nach einer bevorzugten Ausführungsform ebenfalls einen Handknauf 10 auf, der zur leichteren Betätigung der erfindungsgemäßen Vorrichtung dient.

Ein weiteres Element der erfindungsgemäßen Käsereibe ist die gemeinsame Drehachse 11, die bei der in der beiliegenden Figur gezeigten Ausführungsform fest innerhalb der Gegenplatte verankert ist und die zentrale Bohrung 12 der Reibeplatte 1 durchbricht und mit ihrem Endbereich in die entsprechende zentrale Bohrung 13 der Käseträgerplatte 2 hineinragt.

Zur Inbetriebnahme dieser Käsereibe ist es lediglich erforderlich, unter Einhaltung eines gewissen Abstandes der Einheit Gegenplatte-Reibeplatte, das in Reibsel zu zerkleinernde Käsestück auf die Oberfläche der Käseträgerplatte 2, vorzugsweise in die Mulde 5 einzulegen und sodann durch Zusammenführung von Käseträgerplatte 2 und Reibeplatte 1 einen leichten Druck auf das Käsestück auszuüben, wobei gleichzeitig eine gegenläufige rotatorische Bewegung zwischen der Einheit Gegenplatte-Reibeplatte einerseits und Käseträgerplatte andererseits durchgeführt wird, mit dem Ergebnis, daß bei schräggehaltener Vorrichtung die gewünschten Käsereibsel aus dem Zwischenraum zwischen Käseträgerplatte und Reibeplatte herausfallen und direkt beispielsweise in eine Gemüsesuppe hineingegeben werden, wodurch der optimale Geschmackseffekt erreicht wird.

Nach einer anderen bevorzugten Ausführungsform der Inbetriebnahme der erfindungsgemäßen Käsereibe, wird die Einheit Gegenplatte-Reibeplatte-Drehachse so weit von der Käseträgerplatte 2 entfernt, daß die Drehachse 11 völlig von der Käseträgerplatte getrennt ist. Bei dieser Ausführungsform der Inbetriebnahme läßt sich nun ein großes Stück Käse beispielsweise Parmesan-Käse in die Mulde 5 einlegen, wonach der Mittelbereich des eingelegten Käsestücks beim Zusammenbau der beiden Reibe-Einheiten von der Drehachse 11, die bevorzugtermaßen ein spitzauslaufendes Ende aufweist, durchstoßen wird. Im übrigen wird der Käsekörper von den Spitzen 6 festgehalten.

Durch die gegenläufige rotatorische Bewegung der beiden Elemente Gegenplatte-Reibeplatte einerseits und Käseträgerplatte andererseits wird die Produktion der gewünschten Reibsel, die bei Schräghaltung ohne weiteres auf die Speisen geleitet werden können, erreicht.

Dadurch, daß an den Außenflächen sowohl der Gegenplatte 3 als auch der Käseträgerplatte 2 Handknaufe angeordnet sind, wird nicht nur das Aussehen der erfindungsgemäßen Käsereibe verschönert, sondern insbesondere der technische Effekt der Erleichterung des Reibevorgangs erzielt, da die Handknaufe optimal in der Handinnenfläche des die Vorrichtung Betätigenden liegt.

Nach einer bevorzugten Ausführungsform besteht sowohl die Käseträgerplatte 2 gegebenenfalls mit Handknauf, sowie die Gegenplatte 3 gegebenenfalls mit Handknauf aus Holz vorzugsweise aus Hartholz.

**Patentansprüche**

1. Vorrichtung zum Reiben von Käse, bestehend aus einer Reibeplatte, einer Käseträgerplatte und einer Gegenplatte, die koaxial einander zugeordnet sind, wobei die Drehachse (11) durch eine zentrale Bohrung (12) der Reibeplatte (1) durchgeführt ist, dadurch gekennzeichnet, daß die Drehachse (11) fest mit dem Innenbereich der Gegenplatte (3) verbunden ist, und in eine zentrale Bohrung (13) der Käseträgerplatte (2) hineinreicht.

2. Vorrichtung nach Anspruch 1, dadurch gekennzeichnet, daß die Reibeplatte (1), die Käseträgerplatte (2) und die Gegenplatte (3) durch eine gemeinsame Drehachse (11) beweglich verbunden sind.

3. Vorrichtung nach Anspruch 1 bis 2, dadurch gekennzeichnet, daß die Reibeplatte (1) mit der Gegenplatte (3) eine Einheit bildet.

4. Vorrichtung nach Anspruch 3, dadurch gekennzeichnet, daß die Reibeplatte (1) mit der Gegenplatte (3) dadurch eine lösbare Einheit bildet, daß die Reibeplatte (1) an ihrem Umfangsbereich Durchbrechungen aufweist, durch die eine Schraubverbindung (8) mit Fortsätzen (9) an der Unterseite der Gegenplatte (3) geführt ist.

5. Vorrichtung nach Anspruch 1 bis 4, dadurch gekennzeichnet, daß die Reibeplatte (1) aus einEr Edelstahlplatte besteht, die Durchbrechungen aufweist, deren Ränder scharfkantig aufgebogen sind.

6. Vorrichtung nach Anspruch 1 bis 4, dadurch gekennzeichnet, daß die Käseträgerplatte (2) und die Gegenplatte (3) aus Holz vorzugsweise aus Hartholz besteht.

7. Vorrichtung nach Anspruch 1 bis 6, dadurch gekennzeichnet, daß auf der Reibeplatte (1) zugewandten Oberfläche der Käseträgerplatte (2) spitze Stifte (6) zum Festhalten des Käsestücks angeordnet sind.

8. Vorrichtung nach Anspruch 1 bis 7, dadurch gekennzeichnet, daß die der Reibeplatte (1) zugewandte Oberfläche der Käseträgerplatte (2) muldenförmig ausgebildet ist.

9. Vorrichtung nach Anspruch 1 bis 8, dadurch gekennzeichnet, daß die Außenseite der Käseträgerplatte (2) und/oder der Gegenplatte (3) einen Handknauf (10) aufweist.

10. Vorrichtung nach Anspruch 1 bis 9, dadurch gekennzeichnet, daß die Drehachse (11) aus nichtrostendem Stahl besteht.

**Claims**

1. A device for grating cheese, comprising a grating plate, a cheese-holder plate and a counterplate, which are arranged coaxially with one another, wherein a pivot (11) passes through a central bore (12) of the grating plate (1), characterised in that the pivot (11) is securely connected with the inner region of the counterplate (3) and extends into a central bore (13) of the cheese-holder plate (2).

2. A device according to Claim 1, characterised in that the grating plate (1), the cheese-holder plate (2) and the counterplate (3) are movably connected by a common pivot (11).

3. A device according to Claims 1 and 2, characterised in that the grating plate (1) forms a unit with the counterplate (3).

4. A device according to Claim 3, characterised in that the grating plate (1) forms with the counterplate (3) a detachable unit in that in its peripheral region the grating plate (1) has perforations through which are guided screw connections (8) to extensions (9) on the underside of the counterplate (3).

5. A device according to Claims 1 to 4, characterised in that the grating plate (1) comprises a high-grade steel plate which has perforations whose rims are bent over to form sharp edges.

6. A device according to Claims 1 to 4, characterised in that the cheese-holder plate (2) and the counterplate (3) consist of wood, preferably hard wood.

7. A device according to Claims 1 to 6, characterised in that the sharp spikes (6) for securely holding a piece of cheese are provided on the surface of the cheese-holder plate (2) facing the grating plate (1).

8. A device according to Claims 1 to 7, characterised in that the surface of the cheese-holder plate (2) facing the grating plate (1) is in the form of a trough.

9. A device according to Claims 1 to 8, characterised in that the outside of the cheese-holder plate (2) and/or of the counterplate (3) has a knob (10).

10. A device according to Claims 1 to 9, characterised in that the pivot (11) consists of stainless steel.

**Revendications**

1. Dispositif pour râper du fromage, formé d'une plaque de râpage, d une plaque de support de fromage et d'une plaque inverse, qui sont disposées coaxialement entre elles, dans lequel l'axe de rotation (11) est formé par un trou central (12) de la plaque de râpage (1), caractérisé en ce que l'axe de rotation (11) est relié fixement à la zone intérieure de la plaque inverse (3) et pénètre dans un trou central (13) de la plaque de support de fromage (2).

2. Dispositif selon la revendication 1, caractérisé en ce que la plaque de râpage (1), la plaque de support de fromage (2) et la plaque inverse (3) sont reliées de façon mobile par un axe de rotation commun (11).

3. Dispositif selon la revendication 1 ou 2, caractérisé en ce que la plaque de râpage (1) et la plaque inverse (3) forment une unité.

4. Dispositif selon la revendication 3, caractérisé en ce que la plaque de râpage (1) et la plaque inverse (3) forment une unité détachable en ce que la plaque de râpage (1) comporte dans sa zone périphérique des ouvertures par lesquelles on effectue un assemblage par vis (8) avec des prolongements (9) sur la face inférieure de la plaque inverse (3).

5. Dispositif selon une des revendications 1 à 4, caractérisé en ce que la plaque de râpage (1) est formée d'une plaque en acier spécial, qui comporte des ouvertures dont les bords sont recourbés à angles vifs.

6. Dispositif selon une des revendications 1 à 4, caractérisé en ce que la plaque de support de fromage (2) et la plaque inverse (3) sont en bois, de préférence en bois dur.

7. Dispositif selon une des revendications 1 à 6, caractérisé en ce que des chevilles pointues (6) servant à fixer le morceau de fromage sont disposées sur la surface de la plaque de support de fromage (2) tournée vers la plaque de râpage (1).

8. Dispositif selon une des revendications 1 à 7, caractérisé en ce que la surface de la plaque de support de fromage (2) tournée vers la plaque de râpage (1) est réalisée en forme d'auge.

9. Dispositif selon une des revendications 1 à 8, caractérisé en ce que la face extérieure de la plaque de support de fromage (2) et/ou de la plaque inverse (3) comporte(nt) une poignée (10).

10. Dispositif selon une des revendications 1 à 9, caractérisé en ce que l'axe de rotation (11) est en acier inoxydable.

Figur 1